# FASCICULE DE BREVET EUROPEEN

(11) **EP 3 137 813 B1**
(45) Date de publication et mention de la délivrance du brevet: **12.09.2018**
(21) Numéro de dépôt: 15718368.2
(22) Date de dépôt: 28.04.2015
(51) Int. Cl.: F23G 5/08

(54) **AMÉNAGEMENT DE LA TUYÈRE DE SORTIE D'UNE TORCHE À PLASMA IMMERGÉ DÉDIÉE AU TRAITEMENT DE DÉCHETS**
DÜSENANORDNUNG FÜR EINEN UNTERGETAUCHTEN PLASMABRENNER FÜR ABFALLBEHANDLUNG
LAYOUT OF AN OUTLET TUYERE FOR A SUBMERGED PLASMA TORCH FOR WASTE TREATMENT

(30) Priorité: 30.04.2014 FR 1453977
(43) Date de publication de la demande: 08.03.2017
(73) Titulaire: Commissariat à l'Énergie Atomique et aux Énergies Alternatives, 75015 Paris (FR)
(72) Inventeur: BARONNET, Jean-Marie, 87000 Limoges (FR); LEMONT, Florent, 30400 Villeneuve les Avignon (FR); MABROUK, Majdi, 30200 Bagnols sur Ceze (FR); MARCHAND, Mickaël, 30200 Sabran (FR)
(74) Mandataire: Brevalex
(86) Numéro de dépôt international: PCT/EP2015/059226
(87) Numéro de publication internationale: WO 2015/165911

(56) Documents cités:
- WO-A1-2011/064361
- FR-A1- 2 558 571
- US-B1- 6 372 156

## Description

### DOMAINE TECHNIQUE

La présente invention concerne le domaine du traitement des déchets tels que les déchets chimiques avantageusement liquides.

Plus particulièrement, la présente invention concerne l'aménagement de la tuyère de sortie d'une torche à plasma immergée par la mise en place d'un système d'injection de liquide et d'addition d'un système de refroidissement ménagé des gaz de combustion. Ainsi, la présente invention propose un système d'injection et de refroidissement destiné à équiper une torche à plasma, la torche à plasma ainsi équipée ainsi qu'une installation et un procédé de traitement d'une solution liquide comprenant ou utilisant une telle torche à plasma.

### ÉTAT DE LA TECHNIQUE ANTÉRIEURE

Le traitement de déchets liquides de toutes sortes tels que des liquides organiques, dangereux et/ou radioactifs se fait aujourd'hui par des procédés thermiques mettant en jeu des réacteurs de type fours pouvant être de différentes natures comme des fours statiques ou des fours tournants, chauffés par différents moyens.

Ainsi, les procédés de traitement de déchets mettent en oeuvre des unités thermiques connectées à des systèmes de traitement des gaz relativement conséquents pour assurer le refroidissement, la filtration et la neutralisation de certains éléments comme le chlore. Ceci se traduit généralement par des unités de grande taille soumises à de hautes températures. La présence de certains éléments tels que le chlore, le phosphore, le soufre,... soumis à ces hautes températures exacerbe les propriétés corrosives des gaz, ce qui contraint les constructeurs soit à choisir des superalliages souvent très coûteux, soit à admettre un remplacement fréquent de certaines parties du procédé.

Les réacteurs mis en oeuvre peuvent être de différents types. Il peut s'agir de fours chauffés par effet joule, par torches à plasma ou par la combustion de carburants gazeux comme le propane. La température du traitement peut ainsi varier selon la nature de la charge. Si, par exemple, il s'agit d'hydrocarbures de type dodécane, cette charge peut développer une puissance thermique d'environ 10 kW par I/h, puissance qui devra être évacuée. Si, par contre, il s'agit d'une solution aqueuse, la puissance du plasma sera en partie utilisée pour assurer sa vaporisation. Le comportement en température du réacteur impliqué dans le procédé est donc sensiblement impacté par la nature du liquide à traiter.

Selon le procédé, l'introduction des liquides peut varier. Soit ils sont introduits au coeur de la zone chaude du four, soit ils sont introduits dans la source de puissance. Par exemple, ils peuvent être vaporisés dans le gaz combustible ou introduits directement dans un plasma. Ils peuvent être traités seuls ou en mélange avec des solides selon le cas. A titre d'exemple, la demande de brevet EP 0,469,737 propose un procédé et un dispositif de traitement de liquides dans un plasma aérien **[1].** Dans cet exemple, le plasma brûle dans un réacteur en réfractaire et les liquides sont introduits dans le flux gazeux générant le plasma. Un tel procédé nécessite un dispositif relativement lourd puisque les gaz produits doivent être traités via notamment des colonnes de lavage.

De plus, quel que soit le procédé mis en oeuvre, il apparaît que la nature des liquides peut varier sensiblement pour des raisons de dégagements thermiques mais également pour des raisons de compatibilité avec les matériaux choisis pour réaliser le réacteur.

Plusieurs solutions au problème du traitement des déchets impliquant l'utilisation de plasmas immergés ont déjà été proposées. Par exemple, on peut citer la publication de N.V. Alekseev et *al* relatant un procédé de traitement dans lequel un plasma jaillit dans un récipient contenant une solution aqueuse polluée par quelques dizaines de mg de phénol par litre d'eau **[2].** Dans ce cas, le plasma sert à produire du peroxyde d'hydrogène qui oxyde les composés organiques dissous. La publication de G. Fortin et *al* fait également mention d'un procédé mettant en jeu une torche à plasma d'argon/azote, brûlant au fond d'un réacteur rempli de lixiviats chargés en cyanures **[3].** Une demande internationale a d'ailleurs été déposée par les mêmes auteurs pour protéger l'invention **[4].** Dans tous les cas, ces procédés ont été développés pour traiter des solutions aqueuses contenant de faibles quantités de produits à éliminer : quelques ppm de phénol dans le premier cas, quelques ppm de cyanures dans le second. Les produits sont dégradés progressivement par la torche à plasma fonctionnant au coeur de la solution, torche qui produit les radicaux chimiques nécessaires à l'oxydation des composés organiques.

Récemment, la demande internationale WO 2011/064361 a proposé un procédé de traitement des déchets chimiques notamment liquides, amélioré en termes de rapidité et d'efficacité, susceptible de traiter des liquides et ce, quelles que soient leur nature et/ou leur composition, utilisant un dispositif plus simple, plus compact et moins onéreux dans sa réalisation et/ou dans son utilisation **[5].** Le principe du procédé décrit dans cette demande internationale repose sur une torche à plasma d'arc soufflé dans laquelle un liquide à traiter est introduit. Cette torche à plasma tel qu'un plasma d'oxygène, positionnée au fond d'un réacteur rempli d'une solution différente du liquide à traiter et notamment rempli d'eau assure la combustion des composés organiques introduits en son sein ; elle produit des gaz qui sont directement trempés et lavés. La demande WO 2011/064361 divulgue le préambule de la revendication 1. Cette technique présente divers avantages que sont : (i) la trempe très rapide des gaz évitant la formation de composés indésirables tels que dioxines ou furannes ; (ii) la prise en charge directe d'éléments potentiellement corrosifs tels que, par exemple, le chlore, le fluor et le phosphore, par neutralisation dans la solution différente du liquide à traiter et notamment dans l'eau ; (iii) la préfiltration directe des gaz par bullage à travers une certaine hauteur d'eau ; et (iv) le système restant globalement froid ce qui lui permet d'être facilement protégé des risques de corrosion.

Ainsi, le procédé décrit dans la demande internationale WO 2011/064361 permet d'assurer une dégradation rapide de liquides organiques avec des efficacités de destruction voisines de 99,98% lors du traitement de 1 L/h d'hydrocarbure phosphoré.

De plus, la demande internationale WO 2011/064361 décrit une pièce placée en bout de la torche à plasma formant une zone de combustion additionnelle et pouvant présenter deux types de canaux distincts, les uns étant aptes à amener du gaz oxydant et les autres à introduire au coeur du plasma la solution à traiter.

Des recherches ont été réalisées afin d'étendre le domaine de fonctionnement et d'augmenter le débit de traitement ce qui a permis d'atteindre de bons rendements de dégradation avec cependant des gaz de combustion dont la qualité peut être très variable selon les produits traités. Dans certains cas, le taux de CO dans les gaz peut avoisiner 10% ce qui impose, au vu des normes de rejet, soit la mise en place d'une chambre de postcombustion en sortie du réacteur, soit d'exclure certains liquides du spectre de traitement.

Les inventeurs se sont donc fixé pour but d'améliorer encore le procédé décrit dans la demande internationale WO 2011/064361 de façon notamment à augmenter la qualité des gaz rejetés tout en augmentant encore l'efficacité de destruction des composés organiques.

En d'autres termes, les inventeurs se sont fixé pour but de proposer une amélioration technologique conduite dans le but d'optimiser la nature et la composition des gaz avant qu'ils ne soient trempés dans la solution du réacteur, telle que de l'eau, au sein de laquelle le plasma de traitement est immergé.

### EXPOSÉ DE L'INVENTION

Les buts fixés et d'autres encore sont atteints par l'invention qui propose de modifier sensiblement la géométrie de sortie de la torche immergée et, plus particulièrement, d'ajouter en sortie de la torche à plasma plusieurs étages afin d'assurer une destruction optimale des matières organiques accompagnée d'une production de gaz de combustion totalement oxydés.

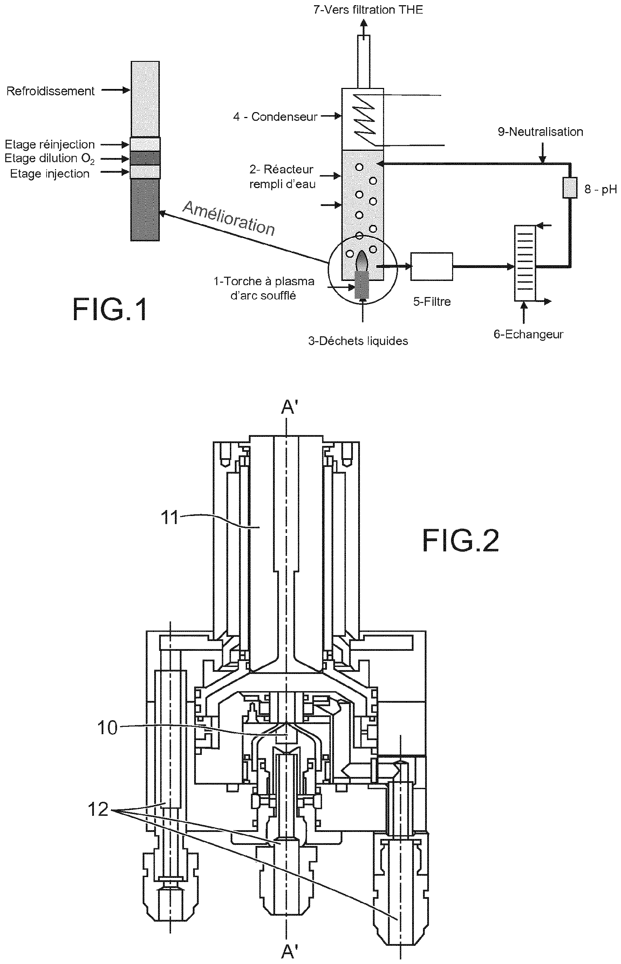

La Figure 1 rappelle sur sa partie droite le concept du procédé décrit dans la demande internationale WO 2011/064361 et permet sur l'encart de gauche de visualiser les parties ajoutées au niveau de la sortie de la torche à plasma et qui constituent le coeur même de la présente invention.

Cet ensemble qui comprend successivement un dispositif d'injection, un dispositif de dilution oxydante, un dispositif de réinjection et un dispositif de refroidissement, permet de garantir une oxydation complète et rapide des gaz issus du procédé et d'obtenir des compositions pour ces gaz conformes avec les différentes normes de rejet. Ainsi, la présente invention concerne un système d'injection et de refroidissement, destiné à équiper une torche à plasma, présentant une cavité destinée à contenir plasma et gaz de combustion et comprenant :
- un premier dispositif d'injection adapté pour (destiné à) injecter, dans ladite cavité, une solution liquide à traiter ci-après désignée solution S₁,
- un second dispositif d'injection disposé contre ledit premier dispositif d'injection et adapté pour (destiné à) injecter, dans ladite cavité, un gaz oxydant,
- un dispositif de refroidissement adapté pour (destiné à) refroidir le ou les gaz contenu(s) dans ladite cavité,
ledit système comprenant un troisième dispositif d'injection interposé entre ledit second dispositif d'injection et ledit dispositif de refroidissement et adapté pour (destiné à) injecter, dans ladite cavité, une solution liquide différente de la solution liquide à traiter ci-après désignée solution S₃ et lesdits quatre dispositifs étant creux, coaxialement alignés et délimitant ladite cavité,
ledit système comprenant successivement ledit premier dispositif d'injection, ledit second dispositif d'injection, ledit troisième dispositif d'injection et ledit dispositif de refroidissement, lesdits dispositifs étant placés l'un sur l'autre. En d'autres termes, l'amélioration objet de la présente invention se base sur l'aménagement de la sortie de la tuyère de la torche à plasma qui a été équipée de 4 éléments technologiques placés l'un sur l'autre et qui sont :
- un premier dispositif ou étage d'injection du liquide à traiter permettant de l'amener au plus près du dard plasma : l'introduction du liquide à traiter et notamment des liquides organiques au plus près du plasma assure une volatilisation et pré-oxydation rapide des composés chimiques présents dans ce liquide ;
- un second dispositif ou étage d'injection en gaz oxydant permettant un ré-enrichissement en oxygène ce qui garantit des conditions stoechiométriques et parfait l'oxydation des composés chimiques et la combustion des gaz de traitement ;
- un troisième dispositif ou étage d'injection de liquide autre que la solution à traiter garantissant un refroidissement rapide des gaz à un niveau de températures nécessaire à un déplacement d'équilibre en faveur d'une meilleure oxydation des gaz et donc favorable aux normes de rejet ; et
- le dernier dispositif ou étage de refroidissement de fin de réaction assurant un temps de séjour suffisant aux gaz afin de permettre la finalisation des réactions et d'atteindre les équilibres chimiques recherchés ce qui permet d'optimiser la combustion avant trempe des gaz dans la solution du réacteur.

Dans le cadre du traitement des déchets liquides, les avantages apportés par le système d'injection et de refroidissement objet de la présente invention concernent essentiellement l'efficacité de destruction des composés organiques ainsi que la qualité des gaz rejetés. De plus, à côté des avantages liés à l'amélioration apportée par le système d'injection et de refroidissement selon l'invention, on retrouve ceux intrinsèques au procédé décrit dans la demande internationale WO 2011/064361 à savoir la destruction d'une solution à traiter injectée au coeur d'un plasma brûlant dans une solution différente de la solution à traiter et notamment dans l'eau, la trempe quasi-instantanée des gaz dans l'eau, la condensation quasi-instantanée des volatils, le dépoussiérage des gaz par effet de lavage et la neutralisation des gaz lors du bullage.

Le premier dispositif d'injection du système selon l'invention, adapté pour (destiné à) introduire, dans ladite cavité, la solution S₁ à traiter comprend au moins un premier canal débouchant dans ladite cavité et adapté pour (destiné à) y conduire ladite solution S₁. Ce dispositif peut comprendre au moins deux premiers canaux, au moins trois premiers canaux, voire au moins quatre premiers canaux débouchant dans ladite cavité et adaptés pour (destinés à) y conduire ladite solution S₁.

Le ou les premiers canaux peuvent présenter une orientation quelconque. Ils peuvent être orientés vers l'orifice de sortie du plasma, vers le second dispositif d'injection ou perpendiculairement à l'axe de la torche à plasma. Les premiers canaux peuvent présenter tous la même orientation ou au moins deux orientations différentes. Toutefois, en variante avantageuse, le ou les premiers canaux sont tous orientés vers l'orifice de sortie du plasma.

Ce premier dispositif est avantageusement en un matériau adapté à la solution S₁ à traiter. Un tel matériau est typiquement un métal tel que du cuivre ou un alliage, notamment un alliage inoxydable tel que de l'acier inoxydable ou un alliage à base de nickel et de chrome et comprenant au moins un élément choisi dans le groupe constitué par le fer, le molybdène, le manganèse, le niobium et le cuivre, des exemples particuliers de tels alliages étant commercialisés sous la marque Inconel. Un tel matériau peut également être une céramique. De plus, ce premier dispositif peut présenter des moyens de refroidissement par circulation interne d'eau.

Le second dispositif d'injection du système selon l'invention, adapté pour (destiné à) introduire, dans ladite cavité, un gaz oxydant comprend au moins un second canal débouchant dans ladite cavité et adapté pour (destiné à) y conduire ledit gaz oxydant. Ce dispositif peut comprendre au moins deux seconds canaux, au moins trois seconds canaux, voire au moins quatre seconds canaux débouchant dans ladite cavité et adaptés pour (destinés à) y conduire ledit gaz oxydant.

Le ou les seconds canaux peuvent présenter une orientation quelconque. Ils peuvent être orientés vers le premier dispositif d'injection, vers le troisième dispositif d'injection ou perpendiculairement à l'axe de la torche à plasma. Les seconds canaux peuvent présenter tous la même orientation ou au moins deux orientations différentes. Toutefois, en variante avantageuse, le ou les seconds canaux sont tous orientés vers le troisième dispositif d'injection.

Ce second dispositif d'injection est avantageusement en un matériau adapté à la solution S₁ à traiter. Un tel matériau est typiquement un métal tel que du cuivre ou un alliage, notamment un alliage inoxydable tel que de l'acier inoxydable ou un alliage à base de nickel et de chrome et comprenant au moins un élément choisi dans le groupe constitué par le fer, le molybdène, le manganèse, le niobium et le cuivre, des exemples particuliers de tels alliages étant commercialisés sous la marque Inconel. De plus, ce second dispositif peut présenter des moyens de refroidissement par circulation interne d'eau.

Le troisième dispositif d'injection du système selon l'invention, adapté pour (destiné à) introduire, dans ladite cavité, une solution liquide différente de la solution liquide à traiter ci-après désignée solution S₃ comprend au moins un troisième canal débouchant dans ladite cavité et adapté pour (destiné à) y conduire ladite solution S₃. Ce dispositif peut comprendre au moins deux troisièmes canaux, au moins trois troisièmes canaux, voire au moins quatre troisièmes canaux débouchant dans ladite cavité et adaptés pour (destinés à) y conduire ladite solution S₃.

Le ou les troisièmes canaux peuvent présenter une orientation quelconque. Ils peuvent être orientés vers le second dispositif d'injection, vers le dispositif de refroidissement ou perpendiculairement à l'axe de la torche à plasma. Les troisièmes canaux peuvent présenter tous la même orientation ou au moins deux orientations différentes. Toutefois, en variante avantageuse, le ou les troisièmes canaux sont tous orientés perpendiculairement à l'axe de la torche à plasma.

Ce troisième dispositif d'injection est avantageusement en un matériau adapté à la solution S₁ à traiter. Un tel matériau est typiquement un métal tel que du cuivre ou un alliage, notamment un alliage inoxydable tel que de l'acier inoxydable ou un alliage à base de nickel et de chrome et comprenant au moins un élément choisi dans le groupe constitué par le fer, le molybdène, le manganèse, le niobium et le cuivre, des exemples particuliers de tels alliages étant commercialisés sous la marque Inconel. De plus, ce troisième dispositif peut présenter des moyens de refroidissement par circulation interne d'eau.

Le dispositif de refroidissement du système selon la présente invention adapté pour (ou destiné à) refroidir le ou les gaz contenu(s) dans ladite cavité présente une longueur suffisante pour assurer une oxydation complète et optimale de la charge organique présente dans la solution à traiter. Avantageusement, ledit dispositif de refroidissement comprend au moins un fourreau refroidi par circulation interne d'eau.

De plus, ce dispositif de refroidissement est avantageusement en un matériau adapté à la solution S₁ à traiter. Un tel matériau est typiquement un métal tel que du cuivre ou un alliage, notamment un alliage inoxydable tel que de l'acier inoxydable ou un alliage à base de nickel et de chrome et comprenant au moins un élément choisi dans le groupe constitué par le fer, le molybdène, le manganèse, le niobium et le cuivre, des exemples particuliers de tels alliages étant commercialisés sous la marque Inconel.

Dans le système d'injection et de refroidissement objet de la présente invention, au moins un dispositif d'injection choisi dans le groupe constitué par le premier dispositif d'injection, le second dispositif d'injection et le troisième dispositif d'injection comprend des moyens de refroidissement par circulation interne d'eau. Dans un mode de réalisation particulier, au moins deux de ces dispositifs d'injection comprennent des moyens de refroidissement par circulation interne d'eau. Ainsi, les premier et second dispositifs d'injection, les premier et troisième dispositifs d'injection ou les second et troisième dispositifs d'injection comprennent des moyens de refroidissement par circulation interne d'eau. Dans un mode de réalisation plus particulier encore, le premier, le second et le troisième dispositifs d'injection comprennent des moyens de refroidissement par circulation interne d'eau.

La présente invention concerne également une torche à plasma équipée d'un système d'injection et de refroidissement tel que précédemment défini. Toute torche à plasma, notamment toute torche à plasma d'arc et, en particulier, toute torche à plasma d'arc soufflé est utilisable dans le cadre de la présente invention. La puissance et l'intensité de la torche à plasma selon la présente invention seront choisies en fonction de la solution S₁ à traiter et du débit à injecter.

La présente invention concerne en outre une installation de traitement d'une solution liquide S₁ comprenant :
- une torche à plasma équipée d'un système d'injection et de refroidissement tel que précédemment défini ;
- un réservoir de solution liquide S₁ ;
- des premiers moyens adaptés pour amener la solution liquide S₁ dudit réservoir de solution liquide S₁ au premier dispositif d'injection dudit système d'injection et de refroidissement ;
- un réservoir de gaz oxydant ;
- des seconds moyens adaptés pour amener le gaz oxydant dudit réservoir de gaz oxydant au second dispositif d'injection dudit système d'injection et de refroidissement ;
- un réservoir de solution liquide S₃ ; et
- des troisièmes moyens adaptés pour amener la solution liquide S₃ dudit réservoir de solution liquide S₃ au troisième dispositif d'injection dudit système d'injection et de refroidissement.

Dans l'installation de traitement selon l'invention, le réservoir de solution liquide S₁ peut être d'une forme et d'un volume quelconques. Il peut être en un matériau adapté à la nature de la solution liquide S₁. Par exemple, un tel matériau peut être un métal, une céramique ou un alliage, notamment un alliage inoxydable tel que de l'acier inoxydable.

La solution S₁ mise en oeuvre dans le cadre de la présente invention peut être toute solution liquide, avantageusement organique, susceptible de contenir au moins un composant organique, toxique, nocif, corrosif et/ou radioactif. Par « composant organique, toxique, nocif, corrosif et/ou radioactif », on entend au moins un élément choisi parmi les métaux lourds ; les éléments radioactifs et les éléments organiques. A titre d'exemples non limitatifs, ces composants sont choisis dans le groupe constitué par le chlore, le fluor, le soufre, le zinc, le phosphore, le mercure, le plomb, le cadmium, l'arsenic, le phénol, les cyanures, les ferrocyanures, les oxalates, les acides humiques, le strontium, le ruthénium, le césium, des émetteurs a, tels que l'américium, le plutonium et l'uranium et leurs mélanges. La solution S₁ peut se présenter sous forme d'un liquide organique pur ou en mélange, un liquide radioactif, une émulsion, une micro-émulsion, une solution aqueuse, une suspension de composés notamment organiques dans une solution aqueuse, un liquide contenant des particules issues de la pulvérisation d'un solide ou un déchet liquide dangereux.

Plus particulièrement, la solution S₁ peut être tout type de solution contenant des matières organiques liées ou non à des minéraux. Une telle solution peut provenir de toutes les applications civiles, nucléaires ou non, ou de toutes les applications militaires, nucléaires ou non. A titre d'exemples non limitatifs, la solution S₁ peut être choisie dans le groupe constitué par une solution issue de stations d'épuration ou de boues de stations d'épuration, des eaux usées, des huiles usagées, des effluents liquides ménagers, des effluents liquides médicaux ou hospitaliers, des effluents liquides industriels et des effluents liquides provenant d'installations nucléaires Dans la présente invention, les expressions « solution S₁ », « solution liquide S₁ », « liquide à traiter » ou « solution à traiter » sont équivalentes et utilisables de façon interchangeable.

Dans l'installation de traitement selon l'invention, le réservoir de gaz oxydant peut être d'une forme et d'un volume quelconques. Le gaz oxydant peut être choisi dans le groupe constitué par l'oxygène, l'air, le dioxyde de carbone et leurs mélanges. Le gaz oxydant est avantageusement de l'oxygène. Le réservoir de gaz oxydant peut être une bouteille de gaz oxydant et notamment d'oxygène sous pression.

Dans l'installation de traitement selon l'invention, le réservoir de solution liquide S₃ peut être d'une forme et d'un volume quelconques. Il peut être en un matériau adapté à la nature de la solution liquide S₃. Par exemple, un tel matériau peut être un métal, un plastique, une céramique ou un alliage, notamment un alliage inoxydable tel que de l'acier inoxydable.

Dans un premier mode de réalisation, le réservoir de solution liquide S₃ est un réacteur contenant une solution S₂ différente de la solution liquide S₁ à traiter. Dans le procédé de traitement selon la présente invention exposé ci-après, c'est dans ce réacteur et donc dans cette solution S₂ que le plasma est immergé. Ce mode de réalisation permet un second passage dans le coeur du plasma des composés organiques éventuellement encore présents dans la solution du réacteur et permet, de fait, d'augmenter encore le taux de destruction des organiques.

Comme expliqué dans la demande internationale WO 2011/064361, la solution S₂ dans laquelle le plasma est immergé assure le refroidissement du réacteur sans obligatoirement nécessiter des éléments supplémentaires pour refroidir les parois du réacteur. Cette solution S₂ a également un rôle dans le traitement des gaz émis puisqu'elle assure la trempe, le dépoussiérage et la neutralisation des gaz produits et la condensation des volatils produits. La solution S₂ fait donc office de refroidisseur, de filtre et de colonne de lavage.

La solution S₂ est une solution aqueuse ou saline et avantageusement de l'eau. La solution S₂ peut en outre contenir au moins un additif assurant la destruction des matières organiques résiduelles. Un tel additif est un catalyseur assurant une dégradation poussée des matières organiques résiduelles. Ces catalyseurs peuvent, par exemple, activer des réactions de Fenton activées par le rayonnement plasma. Il peut s'agir de réactifs de Fenton assurant la production de radicaux sous le rayonnement plasma. Un exemple particulier de tels catalyseurs consiste en des ions métalliques et notamment des ions ferreux permettant la production de radicaux ·OH extrêmement oxydants, les ions ferriques alors produits étant régénérés en ions ferreux par le rayonnement UV. La mise en oeuvre d'une réaction de type Fenton à l'intérieur du réacteur en utilisant le rayonnement UV provenant de la torche à plasma ou d'un autre dispositif procure l'avantage de fournir un moyen de détruire les organiques résiduels, ce type de réaction étant approprié pour traiter des organiques en de très faibles teneurs typiquement de l'ordre de la ppm.

De plus, le pH de la solution S₂ peut être maintenu à une valeur proche de la neutralité. Dans la présente invention, les expressions « solution S₂ », « solution liquide S₂ » et « solution du réacteur » sont équivalentes et utilisables de façon interchangeable.

La solution S₂ est non seulement distincte de la solution S₁ mais aussi ne correspond pas à une solution liquide issue du traitement de déchets notamment liquides tels qu'une solution S₁ ou résultant d'un tel traitement, comme, par exemple, une solution contenant des déchets partiellement traités pouvant provenir d'un traitement préalable de déchets liquides, un bain de fusion issu du traitement des déchets, une couche métallique d'un tel bain de fusion ou une couche de laitiers d'un tel bain de fusion. La définition de la solution S₂ ci-dessus s'entend évidemment au moment où cette dernière est mise en oeuvre i.e. au moment où le plasma y est immergé et préalablement à l'injection de la solution S₁.

Dans un autre mode de réalisation, le réservoir de solution liquide S₃ et le réacteur contenant une solution S₂ différente de la solution liquide S₁ telle que précédemment définie sont deux éléments distincts. En d'autres termes, l'installation de traitement selon la présente invention présente en outre un réacteur contenant une solution S₂ différente de la solution liquide S₁ et telle que précédemment définie. Dans ce mode de réalisation, la solution liquide S₃ contenue dans le réservoir de solution S₃ est typiquement une solution aqueuse ou saline et avantageusement de l'eau.

Quel que soit le mode de réalisation, le réacteur de l'installation selon l'invention peut être d'une forme et d'un volume quelconques. Comme décrit dans la demande internationale WO 2011/064361, la solution S₂ assure le refroidissement du réacteur, ce dernier n'a donc pas obligatoirement besoin d'être réalisé dans un matériau apte à résister à des températures très élevées puisqu'il est froid. Avantageusement, il est en acier inoxydable.

Les premiers moyens adaptés pour amener la solution liquide S₁ dudit réservoir de solution liquide S₁ au premier dispositif d'injection dudit système d'injection et de refroidissement peuvent être un quelconque moyen permettant d'amener un fluide liquide d'un compartiment vers un compartiment distinct. Parmi ces moyens, on peut citer des pompes d'alimentation en liquide et des moyens d'alimentation en liquide par pression hydrostatique. Ces moyens sont connectés fluidiquement au réservoir de solution liquide S₁ et/ou au premier dispositif d'injection dudit système d'injection et de refroidissement par une tuyauterie en matière souple ou en matière rigide.

Les seconds moyens adaptés pour amener le gaz oxydant dudit réservoir de gaz oxydant au second dispositif d'injection dudit système d'injection et de refroidissement peuvent être un quelconque moyen permettant d'amener un fluide gazeux d'un compartiment vers un compartiment distinct, comme, par exemple, des pompes d'alimentation en gaz et des détendeurs. Ces moyens sont connectés fluidiquement au réservoir de gaz oxydant et/ou au second dispositif d'injection dudit système d'injection et de refroidissement par une tuyauterie en matière souple ou en matière rigide.

Les troisièmes moyens adaptés pour amener la solution liquide S₃ dudit réservoir de solution liquide S₃ au troisième dispositif d'injection dudit système d'injection et de refroidissement peuvent être un quelconque moyen permettant d'amener un fluide liquide d'un compartiment vers un compartiment distinct. Parmi ces moyens, on peut citer des pompes d'alimentation en liquide et des moyens d'alimentation en liquide par pression hydrostatique. Ces moyens sont connectés fluidiquement au réservoir de solution liquide S₃ et/ou au troisième dispositif d'injection dudit système d'injection et de refroidissement par une tuyauterie en matière souple ou en matière rigide.

L'installation de traitement objet de la présente invention peut comprendre en outre un dispositif générant des rayonnements ultraviolets. Il est clair que ce dispositif est différent de la torche à plasma présente dans ladite installation. Tout système de rayonnement UV i.e. tout système capable d'émettre un rayonnement dont la gamme de longueur d'onde est dans le proche ultraviolet est utilisable dans le cadre de la présente invention. On peut citer une lampe à vapeur de mercure sous forme d'un tube de type « néon », une lampe à vapeur de sodium, un élément luminescent à semiconducteur, une diode électroluminescente (LED). Ce dispositif générant des rayonnements ultraviolets permet de régénérer les catalyseurs d'une réaction Fenton, présents dans la solution S₂ du réacteur. Lorsque l'installation de traitement selon l'invention ne comprend pas un tel dispositif générant des rayonnements ultraviolets, c'est le plasma qui régénère les catalyseurs d'une réaction Fenton, présents dans la solution S₂ du réacteur.

L'installation de traitement objet de la présente invention peut comprendre en outre au moins un ou plusieurs éléments additionnels tels que ceux décrits pour l'installation objet de la demande internationale WO 2011/064361. Avantageusement, ce ou ces éléments sont choisis dans le groupe constitué par (i') des moyens adaptés pour appliquer un courant électrique ou un potentiel donné à la torche à plasma et plus particulièrement aux électrodes constituant cette torche à plasma, (ii') des moyens adaptés pour alimenter la torche à plasma avec un gaz plasmagène et éventuellement un gaz secondaire, (iii') un condenseur, (iv') un filtre à air, (v') un dispositif de refroidissement de la solution S₂, (vi') un dispositif de filtration de la solution S₂, (vii') des moyens adaptés pour contrôler et ajuster le pH de la solution S₂ et (viii') des moyens adaptés pour ajouter un acide ou une base à la solution S₂.

Les moyens adaptés pour alimenter la torche à plasma avec un gaz plasmagène et éventuellement un gaz secondaire peuvent être un quelconque moyen permettant d'amener un fluide gazeux dans un compartiment tel que des pompes d'alimentation en gaz. Ces moyens sont connectés à la torche plasma par une tuyauterie en matière souple ou en matière rigide. De plus, les moyens aptes à alimenter la torche à plasma avec au moins un gaz plasmagène et éventuellement avec au moins un gaz secondaire peuvent impliquer des canaux débouchant entre l'anode et la cathode de la torche à plasma et/ou des canaux aménagés dans l'anode et/ou la cathode.

Lorsque l'installation de traitement selon la présente invention fonctionne, les gaz générés suite à la gazéification, à la combustion et/ou à l'oxydation bullent dans la solution S₂ où ils sont trempés et épurés de leurs poussières et des espèces chimiques neutralisables telles que HCl, SO₂, SO₃, NO₂, NO₃ et P₂O₅. Avant d'être rejetés à l'extérieur du dispositif et notamment dans le milieu extérieur, ils passent avantageusement dans un condenseur puis éventuellement dans un filtre. Ainsi, l'installation selon la présente invention peut comprendre un condenseur et éventuellement un filtre à air. Avantageusement, le condenseur et éventuellement le filtre sont montés dans la partie supérieure du réacteur.

Le condenseur qui a également un rôle de dévésiculeur utilisable dans le cadre de la présente invention est avantageusement un condenseur à fluide séparé dans lequel un fluide distinct des gaz de combustion et notamment un fluide de réfrigération provenant d'un dispositif frigorifère est maintenu à une température inférieure à celle du (ou des) gaz entrant dans la chambre de combustion. Le condenseur utilisable dans le cadre de la présente invention peut être un condenseur de type échangeur tubulaire de chaleur ou à évaporateur.

Tout type de filtre à air est utilisable en sortie du condenseur dans le cadre de la présente invention. Toutefois, afin d'assurer une filtration de haute efficacité, un filtre de type filtre à charbon actif, filtre en microfibres de verre ou filtre en polytétrafluoroéthylène est utilisable. A titre d'exemples, on peut citer un filtre à panneaux Megalam® ou un filtre à air Micretain®.

Le fonctionnement de la torche à plasma ainsi que la gazéification, la combustion et/ou l'oxydation des composants de la solution S₁ provoquent un échauffement de la solution S₂. Par conséquent, afin de diminuer la pression de vapeur saturante, l'installation selon la présente invention peut comprendre un dispositif de refroidissement de la solution S₂ i.e. système apte à assurer le refroidissement de la solution S₂. De plus, l'installation selon la présente invention peut comprendre en outre un dispositif de filtration de la solution S₂ i.e. un système apte à assurer la filtration de la solution S₂.

Ainsi, l'installation selon la présente invention comprend avantageusement un échangeur muni en amont d'un filtre. L'échangeur utilisable dans le cadre de la présente invention est un échangeur de chaleur de type double-flux dans lequel la solution S₂ échange de la chaleur avec un autre flux liquide ou gazeux de façon à maintenir la température de la solution S₂ à un niveau limitant la tension de vapeur à la surface du réacteur. Cet échangeur de chaleur peut être un échangeur en tube en U, un échangeur à faisceau tubulaire horizontal ou vertical, un échangeur à spirale ou un échangeur à plaque.

Un filtre est avantageusement placé en amont de l'échangeur pour récupérer les poussières issues de la combustion et tout solide issu de la précipitation des minéraux présents dans la solution S₁. Le filtre mis en oeuvre dans le cadre du dispositif selon l'invention comprend au moins une membrane avantageusement du type nanofiltration, microfiltration ou ultrafiltration. Ces membranes sont définies par des tailles de pores inférieures à la taille moyenne particulaire des poussières et solides, classiquement de l'ordre du micromètre jusqu'à la dizaine de nanomètres.

Lors du traitement, la solution S₂ peut devenir acide ou basique selon le cas. Aussi, le dispositif selon la présente invention peut comprendre en outre des moyens adaptés pour contrôler et ajuster le pH de la solution S₂.

Ces moyens peuvent comprendre une électrode de mesure du pH placé dans le réacteur ou dans un circuit externe au réacteur mais connecté à ce dernier. La mesure du pH peut être effectuée en continu ou par intermittence. L'électrode de mesure du pH est connectée, directement ou indirectement, à des moyens adaptés pour ajouter un acide ou une base à la solution S₂.

La présente invention concerne de plus un procédé de traitement d'une solution S₁ telle que précédemment définie comprenant une étape consistant à injecter ladite solution S₁ dans (i.e. au coeur de) un plasma généré à partir d'une torche à plasma telle que précédemment définie et immergé dans une seconde solution liquide ci-après désignée solution S₂ distincte de ladite solution S₁ telle que précédemment définie.

Par « traitement d'une solution S₁ », on entend dans le cadre de la présente invention diminuer la quantité de composants organiques, toxiques et/ou nocifs tels que précédemment définis et stabiliser ceux qui peuvent être corrosifs et/ou radioactifs, ces composants étant présents dans la solution S₁ avant le traitement selon l'invention. Cette diminution peut impliquer l'élimination de ces composants et/ou leur transformation en composants moins nocifs. Avantageusement, au moins 70%, au moins 80%, au moins 90%, au moins 95%, au moins 96%, au moins 97%, au moins 98%, au moins 99% ou voire la totalité des composants chimiques initialement contenus dans la solution S₁ sont éliminés et/ou transformés en composants moins nocifs suite au traitement de l'invention.

Le procédé selon la présente invention comprend avantageusement les étapes consistant à :
a) générer un plasma à partir d'une torche à plasma équipée d'un système d'injection et de refroidissement tel que précédemment défini ;
b) immerger le plasma généré à l'étape (a) dans une solution S₂ telle que précédemment définie ;
c) introduire du gaz oxydant à proximité du plasma via le second dispositif d'injection dudit système d'injection et de refroidissement ;
d) introduire la solution S₃ telle que précédemment définie à proximité du plasma via le troisième dispositif d'injection dudit système d'injection et de refroidissement ; et
e) introduire la solution S₁ telle que précédemment définie dans le plasma ainsi immergé via le premier dispositif d'injection dudit système d'injection et de refroidissement.

Typiquement, les étapes (a), (b) et (c) sont réalisées de façon successive. Les étapes (c), (d) et (e) peuvent être réalisées de façon successive ou de façon simultanée.

L'étape (a) du procédé selon l'invention consiste à générer un plasma et notamment un plasma à arc soufflé à partir d'une torche à plasma telle que précédemment définie. Avantageusement, une décharge électrique est produite au niveau de la torche à plasma constituée d'électrodes alors qu'un gaz plasmagène passe entre ces électrodes, ce qui génère le plasma.

Le gaz plasmagène utilisable peut être tout gaz connu de l'homme du métier. Il peut varier selon la technologie de torche à plasma utilisée. Dans le cadre de la présente invention, le gaz plasmagène comporte un gaz oxydant nécessaire à la réactivité du plasma et/ou un gaz neutre nécessaire à la protection de la cathode de la torche.

Dans une première variante, le gaz plasmagène ne comporte qu'un gaz oxydant. Cette variante utilise une torche ne nécessitant pas de gaz neutre de protection. Le gaz oxydant peut ainsi être choisi dans le groupe constitué par l'oxygène, l'air, le dioxyde de carbone et leurs mélanges. Le gaz oxydant est avantageusement de l'oxygène.

Dans une seconde variante, le gaz plasmagène comporte un gaz oxydant tel que précédemment défini et un gaz neutre. Le gaz neutre est notamment choisi dans le groupe constitué par l'argon, l'hélium, l'azote et leurs mélanges. Avantageusement, le plasma obtenu est choisi dans le groupe constitué par un plasma argon/oxygène, un plasma hélium/oxygène, et un plasma azote/oxygène.

Dans une troisième variante correspondant notamment au cas où une gazéification non oxydante est recherchée lors de l'étape (c) du procédé, le plasma fonctionne uniquement au gaz neutre tel que précédemment défini et notamment à l'argon et ne nécessite pas d'ajout d'oxygène. Si une oxydation est requise pour détruire des composants organiques contenus dans la solution S₁, alors un flux d'oxygène peut être ajouté afin de produire un plasma gaz neutre/oxygène, ce flux d'oxygène étant apporté via le second dispositif d'injection dudit système d'injection et de refroidissement tel que précédemment défini.

Dans une quatrième variante, le gaz plasmagène est un gaz d'exhaure recyclé vers la torche à plasma. Un tel gaz comporte avantageusement les composés CO₂/O₂/Argon. Dans cette variante, des technologies de torches utilisant couramment des anodes et cathodes en cuivre refroidi peuvent être envisagées. D'autres métaux comme du tungstène peuvent être envisagés selon les modes d'exploitation choisis. Ainsi, dans cette quatrième variante, le plasma mis en oeuvre recycle tout ou partie des gaz émis par le procédé comme gaz plasmagène.

L'étape (b) du procédé selon la présente invention consiste à remplir le réacteur dans lequel a été généré le plasma lors de l'étape (a) avec la solution S₂. Lors du remplissage du réacteur, ce dernier n'est pas complètement rempli par la solution S₂.

La solution S₂, lors de l'étape (b), a une température comprise entre 20 et 60°C et, notamment à une température régulée autour de 30°C ± 5°C. Par conséquent, la température du réacteur relativement élevée suite à l'étape (a) est abaissée, avantageusement jusqu'à la température de la solution (S₂). On peut donc parler dans la présente invention de « réacteur froid ».

Dès le plasma initié, le réacteur doit être rempli rapidement pour éviter l'échauffement du système.

L'étape (c) du procédé selon la présente invention consiste à ré-enrichir le plasma en gaz oxydant. Dans le cadre de la présente invention, ce ré-enrichissement se fait via le second dispositif d'injection dudit système d'injection et de refroidissement.

La vitesse d'introduction du gaz oxydant dépendra de la puissance du plasma utilisé et de la nature de la solution S₁. Selon le cas, elle pourra atteindre plusieurs dizaines de litres par heure. L'introduction de gaz oxydant lors de l'étape (c) peut se faire en continu ou de façon séquentielle par une alternance de moments avec et sans introduction de gaz oxydant.

L'étape (c) du procédé selon la présente invention peut durer de quelques minutes à plusieurs heures voire plusieurs jours. Ainsi, l'étape (c) du procédé selon la présente invention peut être réalisée 24 h/24 pendant des durées cohérentes avec la durée de vie de la torche à plasma.

L'étape (d) du procédé selon la présente invention consiste à mettre en contact la solution S₃ telle que précédemment définie avec le plasma et éventuellement les gaz de combustion. Dans le cadre de la présente invention, cette mise en contact se fait via le troisième dispositif d'injection dudit système d'injection et de refroidissement.

La vitesse d'introduction de la solution S₃ dépendra de la puissance du plasma utilisé et de la nature de la solution S₃. Selon le cas, elle pourra atteindre plusieurs dizaines de litres par heure. L'introduction de la solution S₃ lors de l'étape (d) peut se faire en continu ou de façon séquentielle par une alternance de moments avec et sans introduction de solution.

L'étape (d) du procédé selon la présente invention peut durer de quelques minutes à plusieurs heures voire plusieurs jours. Ainsi, l'étape (e) du procédé selon la présente invention peut être réalisée 24 h/24 pendant des durées cohérentes avec la durée de vie de la torche à plasma.

L'étape (e) du procédé selon la présente invention consiste à mettre en contact la solution S₁ avec le coeur du plasma pour que le traitement tel que précédemment défini ait lieu de façon instantanée. Dans le cadre de la présente invention, cette introduction se fait via le premier dispositif d'injection dudit système d'injection et de refroidissement.

La vitesse d'introduction de la solution S₁ dépendra de la puissance du plasma utilisé et de la nature de la solution S₁. Selon le cas, elle pourra atteindre plusieurs dizaines de litres par heure. L'introduction de la solution S₁ lors de l'étape (e) peut se faire en continu ou de façon séquentielle par une alternance de moments avec et sans introduction de solution.

L'étape (e) du procédé selon la présente invention peut durer de quelques minutes à plusieurs heures voire plusieurs jours. Ainsi, l'étape (e) du procédé selon la présente invention peut être réalisée 24 h/24 pendant des durées cohérentes avec la durée de vie de la torche à plasma.

Comme précédemment expliqué, la réaction de gazéification, de combustion et/ou d'oxydation des composants de la solution S₁ a lieu de façon instantanée dans le plasma dès la mise en contact de la solution S₁ avec ce dernier.

Après les étapes (c), (d) et (e) du procédé selon la présente invention, les gaz dissociés une fois sortis du plasma doivent être rapidement neutralisés et trempés notamment pour éviter la formation de molécules complexes toxiques telles que furannes ou dioxines. C'est la solution S₂ qui assure ces fonctions. De même, les poussières et les composés volatils de la réaction de gazéification, de combustion et/ou d'oxydation sont respectivement éliminés et condensés grâce à la solution S₂.

Le procédé selon la présente invention comprend une étape supplémentaire consistant à filtrer, refroidir et/ou neutraliser ladite solution S₂. Il convient de souligner que le fonctionnement de la torche à plasma et les réactions intervenant durant les étapes (c), (d) et (e) et notamment durant l'étape (e) du procédé selon la présente invention peuvent provoquer un échauffement de la solution S₂ située dans le réacteur.

Aussi, afin de diminuer la pression de vapeur saturante, le procédé selon la présente invention peut comprendre une étape supplémentaire consistant à refroidir la solution S₂. Cette étape supplémentaire peut avoir lieu pendant ou après l'une quelconque des étapes (c), (d) et (e) du procédé. Avantageusement, le refroidissement de la solution S₂ est mis en oeuvre simultanément à l'étape (c) du procédé. En variante, le refroidissement de la solution S₂ est mis en oeuvre simultanément à l'étape (e) du procédé.

Tout système apte à diminuer la température d'un liquide est utilisable pour cette étape de refroidissement. Avantageusement, cette étape met en oeuvre une boucle parallèle de traitement impliquant un échangeur ou un aéroréfrigérant.

Un filtre assurant le blocage des particules minérales issues du traitement et de la destruction de la solution S₁ est avantageusement mis en place sur la boucle, en amont de l'échangeur servant à refroidir la solution S₂.

Enfin, lorsque le procédé de traitement selon la présente invention est terminé, le réacteur est purgé de la solution S₂ laissant ainsi le plasma émerger pendant une courte durée, durée nécessaire pour assurer le séchage des pièces surmontant la torche afin d'éviter que de la solution S₂ ne pénètre dans sa tuyère. Ce temps d'émersion produit un échauffement normal du réacteur. La durée durant laquelle le plasma est émergé doit être rapide mais suffisante pour assurer le séchage des pièces surmontant la torche. Elle peut être comprise entre 10 sec et 5 min.

Une fois la torche éteinte, l'alimentation en gaz plasmagène(s) doit être maintenue pour assurer un séchage total de la torche. Cette alimentation peut être maintenue pendant une durée supérieure à 10 min.

D'autres caractéristiques et avantages de la présente invention apparaîtront encore à l'homme du métier à la lecture des exemples ci-après donnés à titre illustratif et non limitatif, en référence aux figures annexées.

### BRÈVE DESCRIPTION DES DESSINS

La Figure 1 est une vue générale et schématique d'un dispositif de traitement des déchets liquides selon la demande internationale WO 2011/064361 et selon la présente invention avec en encart la schématisation du système d'injection et de refroidissement objet de la présente invention.

La Figure 2 est une vue plus détaillée d'une torche plasma à arc soufflé susceptible d'être utilisée dans un dispositif de traitement des déchets liquides selon la présente invention.

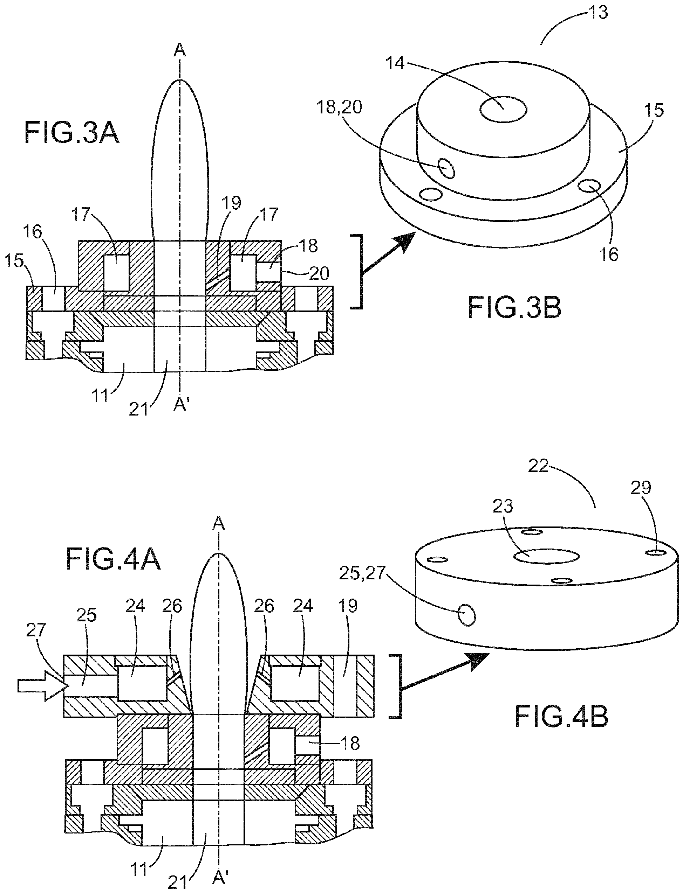

La Figure 3 concerne le premier dispositif d'injection du système d'injection et de refroidissement objet de la présente invention. La Figure 3A est une vue schématique partielle en coupe longitudinale du premier dispositif d'injection du système d'injection et de refroidissement disposé sur la torche à plasma. La Figure 3B est une vue schématique partielle en perspective du premier dispositif d'injection du système d'injection et de refroidissement.

La Figure 4 concerne le second dispositif d'injection du système d'injection et de refroidissement objet de la présente invention. La Figure 4A est une vue schématique partielle en coupe longitudinale du premier et du second dispositifs d'injection du système d'injection et de refroidissement disposé sur la torche à plasma. La Figure 4B est une vue schématique partielle en perspective du second dispositif d'injection du système d'injection et de refroidissement.

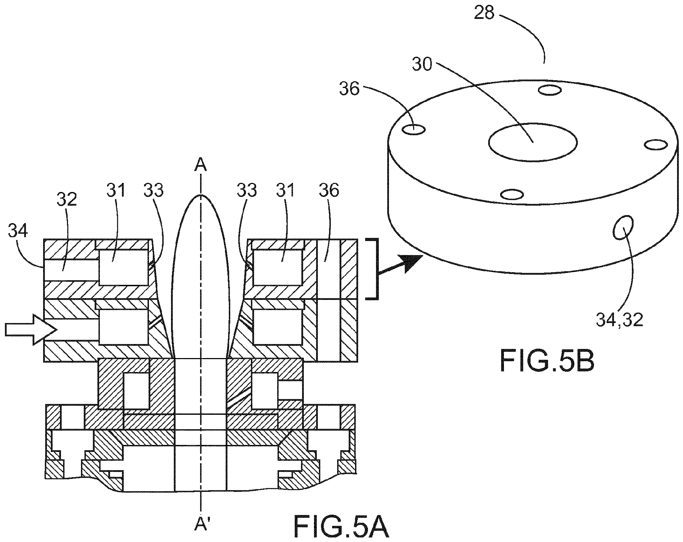

La Figure 5 concerne le troisième dispositif d'injection du système d'injection et de refroidissement objet de la présente invention. La Figure 5A est une vue schématique partielle en coupe longitudinale des premier, second et troisième dispositifs d'injection du système d'injection et de refroidissement disposé sur la torche à plasma. La Figure 5B est une vue schématique partielle en perspective du troisième dispositif d'injection du système d'injection et de refroidissement.

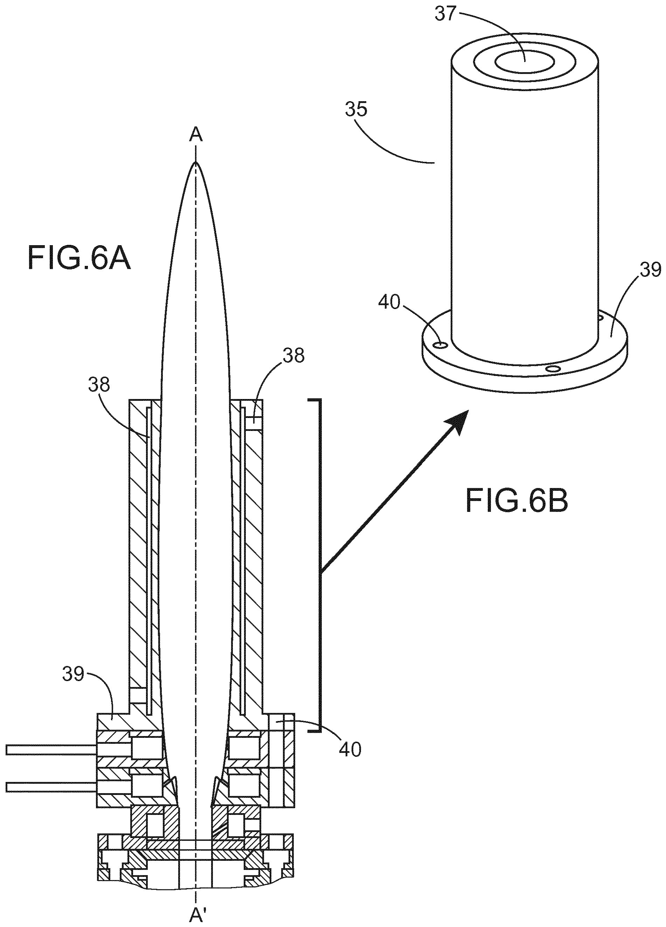

La Figure 6 concerne le dispositif de refroidissement du système d'injection et de refroidissement objet de la présente invention. La Figure 6A est une vue schématique partielle en coupe longitudinale des premier, second et troisième dispositifs d'injection et du dispositif de refroidissement du système d'injection et de refroidissement disposé sur la torche à plasma. La Figure 6B est une vue schématique partielle en perspective du dispositif de refroidissement du système d'injection et de refroidissement.

### EXPOSÉ DÉTAILLÉ DE MODES DE RÉALISATION PARTICULIERS

### I. Dispositif

Dans tout ce qui suit, les termes « axial » et « radial » sont définis par rapport à l'axe de la torche à plasma **AA'.**

La figure 1 illustre sur sa partie droite le principe de fonctionnement du procédé tel que décrit dans la demande internationale WO 2011/064361 **[5]** et tel que mis en oeuvre dans la présente invention.

La Figure 1 illustre la description fournie ci-dessous. La présente invention est basée sur l'utilisation d'un plasma d'arc soufflé **1** immergé dans un réacteur de forme cylindrique et d'un volume de 50 L, rempli d'eau **2.** Le produit liquide à traiter **3** tel qu'un mélange de tributyl phosphate (TBP) et de dodécane est introduit dans le plasma par le premier dispositif d'injection du système d'injection et de refroidissement selon l'invention. Une fois dans le plasma, le liquide est instantanément porté à très haute température de l'ordre de 2000°C en présence d'oxygène, ce qui a pour conséquence la destruction totale des matières organiques.

La Figure 2 représente la torche à plasma utilisée. Il s'agit d'une torche à plasma classique dans laquelle une cathode métallique réfractaire **10** notamment en tungstène, de forme conique, protégée par un courant d'argon génère un arc électrique vers une anode **11.** L'anode **11** se présente sous forme d'un fourreau en cuivre d'une longueur de 10 cm et d'un diamètre de 10 mm. Cet arc est soufflé par un flux d'argon et d'oxygène. La torche plasma utilisée présente un dispositif de refroidissement **12** par circulation interne d'eau du diaphragme et de l'anode.

Les Figures 3A et 3B représentent le premier dispositif d'injection **13** du système d'injection et de refroidissement selon l'invention. Ce premier dispositif se place en sortie de la torche plasma et notamment à proximité de l'anode **11.** Plus particulièrement, ce premier dispositif se présente sous forme d'une pièce métallique refroidie en Inconel® de hauteur de 26 mm, cylindrique à section circulaire et présentant un évidement central **14** de forme cylindrique à section circulaire. Cet évidement central **14** forme partie de la cavité du système d'injection et de refroidissement. Ce premier dispositif présente une bride de fixation **15** en saillie radiale vers l'extérieur présentant au moins un orifice **16** de passage d'un tirant. Avantageusement, la bride de fixation présente quatre orifices **16** de passage de tirants. Ce premier dispositif **13** présente une chambre de circulation **17** du liquide à traiter, au moins un canal d'admission **18** du liquide à traiter débouchant dans ladite chambre de circulation **17** et au moins un canal d'injection **19** du liquide à traiter raccordé à ladite chambre de circulation **17** et débouchant dans l'évidement central **14** i.e. dans la cavité du système d'injection et de refroidissement. Le canal d'admission **18** du liquide à traiter débouche par au moins un orifice **20** sur la paroi latérale du premier dispositif d'injection **13.** Le canal d'injection **19** est orienté vers l'orifice de sortie du plasma **21.** Le liquide à traiter est injecté à une vitesse de quelques centimètres par seconde, cette vitesse variant selon un débit réglable entre 0 et 4 litres par heure.

Les Figures 4A et 4B représentent le second dispositif d'injection **22** du système d'injection et de refroidissement selon l'invention. Ce second dispositif **22** se place sur et en contact avec le premier dispositif d'injection **13.** Plus particulièrement, ce second dispositif **22** se présente sous forme d'une pièce métallique **en** Inconel®, de hauteur de 22 mm, cylindrique à section circulaire et présentant un évidement central **23.** Les parois délimitant l'évidement central **23** présentent une surface radiale interne de forme tronconique. De fait, ce second dispositif **22** forme un divergent en sortie de tuyère. Ce second dispositif **22** présente une chambre de circulation **24** du gaz oxydant, au moins un canal d'admission **25** du gaz oxydant débouchant dans ladite chambre de circulation **24** et au moins un canal d'injection **26** du gaz oxydant raccordé à ladite chambre de circulation **24** et débouchant dans l'évidement central **23** i.e. dans la cavité du système d'injection et de refroidissement. Le canal d'admission **25** du gaz oxydant débouche par au moins un orifice **27** sur la paroi latérale du second dispositif d'injection **22.** Le canal d'injection **26** de quelques mm de diamètre est orienté vers le troisième dispositif d'injection **28.** Le second dispositif d'injection présente au moins un orifice **29** de passage d'un tirant. Avantageusement, il présente quatre orifices **29** de passage de tirants.

Les Figures 5A et 5B représentent le troisième dispositif d'injection **28** du système d'injection et de refroidissement selon l'invention. Ce troisième dispositif **28** se place sur et en contact avec le second dispositif d'injection **22.** Plus particulièrement, ce troisième dispositif **28** se présente sous forme d'une pièce métallique en acier inoxydable, de hauteur de 22 mm, cylindrique à section circulaire et présentant un évidement central **30** cylindrique à section circulaire et présentant un évidement central **30.** Les parois délimitant l'évidement central **30** présentent une surface radiale interne de forme tronconique. Ce troisième dispositif **28** présente une chambre de circulation **31** de la solution S₃ telle que précédemment définie et notamment d'eau, au moins un canal d'admission **32** de la solution S₃ et notamment d'eau débouchant dans ladite chambre de circulation **31** et au moins un canal d'injection **33** de la solution S₃ et notamment d'eau raccordé à ladite chambre de circulation **31** et débouchant dans l'évidement central **30** i.e. dans la cavité du système d'injection et de refroidissement. Le canal d'admission **32** de la solution S₃ et notamment d'eau débouche par au moins un orifice **34** sur la paroi latérale du troisième dispositif d'injection **28.** Le canal d'injection **33** est orienté vers le dispositif de refroidissement **35.** Le troisième dispositif d'injection présente au moins un orifice **36** de passage d'un tirant. Avantageusement, il présente quatre orifices **36** de passage de tirants.

Les Figures 6A et 6B représentent le dispositif de refroidissement **35** du système d'injection et de refroidissement selon l'invention. Ce dispositif de refroidissement **35** se présente sous forme d'une pièce métallique **en acier inoxydable,** de hauteur de **107 mm,** présentant la forme d'une cheminée (ou d'un fourreau ou d'une tuyère) et présentant un évidement central sous forme d'une cheminée (ou d'un fourreau ou d'une tuyère) dont les parois internes délimitent un évidement central **37** cylindrique à section circulaire. Dans sa paroi, le dispositif de refroidissement **35** présente un canal **38** ou plusieurs canaux de circulation d'un fluide de refroidissement tel que de l'eau. Ce dispositif de refroidissement **35** présente une bride de fixation **39** en saillie radiale vers l'extérieur présentant au moins un orifice **40** de passage d'un tirant. Avantageusement, la bride de fixation présente quatre orifices **40** de passage de tirants.

Le système d'injection et de refroidissement selon l'invention présente au moins un tirant ou boulon qui assure conjointement la fixation et le serrage des dispositifs **13, 22, 28** et **35** les uns aux autres et avec la torche à plasma. Ces tirants traversent les orifices **16, 27, 34** et **40.**

Le procédé de traitement utilisant un plasma d'arc soufflé **1** obtenu à partir d'une torche à plasma équipé d'un système d'injection et de refroidissement immergé dans un réacteur rempli d'une solution aqueuse **2.** Cette solution aqueuse peut en outre contenir sous forme solubilisés des ions métalliques et du peroxyde d'hydrogène afin d'assurer une réaction de Fenton entretenue par le rayonnement UV provenant de la torche à plasma.

Après une gazéification et une décomposition instantanées dans le panache du plasma argon-oxygène, les composés organiques résiduels ou partiellement oxydés sont soumis à un second flux d'oxygène introduit par l'intermédiaire du second dispositif d'injection **22** du système d'injection et de refroidissement selon l'invention.

Les gaz de combustion sont alors trempés à l'eau afin qu'ils atteignent un niveau de température permettant d'établir des équilibres chimiques compatibles aux exigences de rejet. L'ajout d'eau qui peut également être la solution aqueuse du réacteur est assuré grâce au troisième dispositif d'injection **28** du système d'injection et de refroidissement selon l'invention.

Les gaz passent alors à travers le dispositif de refroidissement **35** du système d'injection et de refroidissement selon l'invention dans lequel ils finissent de refroidir et prennent leur composition finale avant de pénétrer au coeur de la solution aqueuse dans laquelle ils sont instantanément trempés.

Lors du bullage, les gaz sont épurés de leurs poussières et des espèces chimiques neutralisables telles que HCl, HF, SOx, NOx, P₂O₅, .... Ils passent ensuite à travers un condenseur **4** qui sert également de dévésiculeur puis sont évacués vers l'extérieur. Selon le niveau d'épuration demandé, les gaz peuvent subir une filtration de très haute efficacité **7** pour empêcher toute sortie de particules.

La solution aqueuse du réacteur peut contenir des ions permettant de catalyser l'optimisation de la dégradation des composés résiduels à très faible teneur. Par exemple, des ions ferreux Fe²⁺ associés à la présence de peroxyde d'hydrogène peuvent être ajoutés afin de catalyser la formation de radicaux OH assurant la destruction des organiques résiduels. La transition Fe³⁺/Fe²⁺ peut alors être assurée par le rayonnement UV provenant du plasma d'arc.

Le fonctionnement de la torche à plasma ainsi que la combustion des matières organiques provoquent un échauffement de la solution aqueuse située dans le réacteur. Afin de diminuer la pression de vapeur saturante, l'eau est refroidie en boucle à travers un échangeur **6.** Sa température est maintenue à un niveau qui limite la tension de vapeur à la surface du réacteur. Le circuit de refroidissement est muni en amont de l'échangeur **6** d'un filtre **5** assurant la récupération des solides provenant de la précipitation des minéraux présents dans les effluents à traiter. Cette boucle filtration - refroidissement soutire la solution dans la partie basse du réacteur et la réintroduit dans sa partie haute.

Lors du traitement, la solution du réacteur peut devenir acide ou basique selon le cas. Un suivi en ligne du pH **8** permet un ajustement continu de sa valeur par ajout d'un acide ou d'une base selon le cas **9.** Cet ajustement doit le cas échéant, prendre en compte les impératifs chimiques imposés par la mise en oeuvre de la réaction de Fenton.

### II. Fonctionnement et performances

Les phases de développements expérimentaux ayant permis de concevoir les améliorations décrites dans la présente invention illustrent bien les différentes étapes d'amélioration.

Les tests ont été réalisés sur une solution à traiter comprenant un mélange de tributyl phosphate (TBP) et de dodécane, mélange ayant la double particularité d'avoir un PCl élevé (∼ 10kW.h.L⁻¹). Cette solution a été injectée dans le plasma à un débit d'introduction de 3L.h⁻¹.

La torche à plasma fonctionne sous un débit de 30 NLmn⁻¹ d'argon et de 180 NL.mn⁻¹ d'oxygène dans la disposition représentée sur la Figure 1.

Les mesures réalisées sur la composition de la solution montrent des taux de destruction supérieurs à 99,5%. La mise en place des différents étages en sortie de torche à plasma modifie sensiblement la composition des gaz rejetés. Les teneurs en CO et en CO₂, représentatives du niveau d'oxydation du mélange gazeux ont été suivies dans les quatre cas de figure suivants :

### Injection brute dans la flamme plasma :

Composition CO en sortie : 12%
Composition CO₂ en sortie : 4%

### Injection dans la flamme plasma suivie d'un ré-enrichissement en O₂ (40 NL.mn⁻¹) :

Composition CO en sortie : 9%
Composition CO₂ en sortie : 6%

A noter ici que l'ajout d'oxygène assure une meilleure oxydation mais également un refroidissement partiel du gaz permettant de déplacer thermiquement l'équilibre CO/CO₂.

### Injection dans la flamme plasma suivie d'un ré-enrichissement en O₂ (40 NL.mn⁻¹) et d'un refroidissement en tuyère :

Composition CO en sortie : 8%
Composition CO₂ en sortie : 9%

Le refroidissement apporté par la tuyère de sortie n'est pas suffisant puisque le taux de CO en encore bien supérieur aux normes de rejet.

### Injection dans la flamme plasma suivie d'un ré-enrichissement en O₂ (40 NL.mn⁻¹), d'un ajout d'eau de refroidissement (0,3 L.mn⁻¹) et d'un refroidissement en tuyère :

Composition CO en sortie : 0,2%
Composition CO₂ en sortie : 8%

Ce dernier essai montre l'efficacité des améliorations technologiques mises en place.

### RÉFÉRENCES

**[1]** Demande de brevet EP 0,469,737 (Tioxide Group Services Limited) *"Destruction process"* publiée le 5 février 1992.
**[2]** Alekseev N.V., Samokhin A.V., Belivtsev A.N. and Zhavoronkova V.I., (2000) "Thermal-Plasma Jet Oxidation of Phenol in Aqueous Solutions", High Energy Chemistry, Vol. 34, N° 6, pp. 389-393.
**[3]** Fortin L., Soucy G., Kasireddy V., Bernier J.-L., Boulos M.I (1999) "The Use of Thermal Plasma for Wastewater Treatment", 14th International Symposium on Plasma Chemistry - ISPC'14, Prague (Czech Republic), pp. 2387-2392.
**[4]** Demande internationale WO 97/22556 (Alcan International Limited) *"Thermal Plasma Reactor and Wastewater Treatment Method"* publiée le 26 juin 1997.
**[5]** Demande internationale WO 2011/064361 (CEA) *"Procédé et dispositif pour le traitement des déchets par injection dans un plasma immergé"* publiée le 3 juin 2011.

## Revendications

1. Système d'injection et de refroidissement, destiné à équiper une torche à plasma, présentant une cavité destinée à contenir plasma et gaz de combustion et comprenant :
- un premier dispositif d'injection adapté pour injecter, dans ladite cavité, une solution liquide à traiter ci-après désignée solution S₁,
- un second dispositif d'injection disposé contre ledit premier dispositif d'injection et adapté pour injecter, dans ladite cavité, un gaz oxydant,
- un dispositif de refroidissement adapté pour refroidir le ou les gaz contenu(s) dans ladite cavité,
**caractérisé en ce que** ledit système comprend un troisième dispositif d'injection interposé entre ledit second dispositif d'injection et ledit dispositif de refroidissement et adapté pour injecter, dans ladite cavité, une solution liquide différente de la solution liquide à traiter ci-après désignée solution S₃ et lesdits quatre dispositifs étant creux, coaxialement alignés et délimitant ladite cavité, et **en ce que** ledit système comprend successivement ledit premier dispositif d'injection, ledit second dispositif d'injection, ledit troisième dispositif d'injection et ledit dispositif de refroidissement, lesdits dispositifs étant placés l'un sur l'autre.

2. Système d'injection et de refroidissement selon la revendication 1, **caractérisé en ce que** ledit premier dispositif d'injection comprend au moins un premier canal débouchant dans ladite cavité et adapté pour y conduire ladite solution S₁.

3. Système d'injection et de refroidissement selon la revendication 1 ou 2, **caractérisé en ce que** ledit second dispositif d'injection comprend au moins un second canal débouchant dans ladite cavité et adapté pour y conduire ledit gaz oxydant.

4. Système d'injection et de refroidissement selon l'une quelconque des revendications 1 à 3, **caractérisé en ce que** ledit troisième dispositif d'injection comprend au moins un troisième canal débouchant dans ladite cavité et adapté pour y conduire ladite solution S₃.

5. Système d'injection et de refroidissement selon l'une quelconque des revendications 1 à 4, **caractérisé en ce que** ledit dispositif de refroidissement comprend au moins un fourreau refroidi par circulation interne d'eau.

6. Torche à plasma équipée d'un système d'injection et de refroidissement tel que défini à l'une quelconque des revendications 1 à 5.

7. Installation de traitement d'une solution liquide S₁ comprenant :
- une torche à plasma équipée d'un système d'injection et de refroidissement tel que défini à l'une quelconque des revendications 1 à 5 ;
- un réservoir de solution liquide S₁ ;
- des premiers moyens adaptés pour amener la solution liquide S₁ dudit réservoir de solution liquide S₁ au premier dispositif d'injection dudit système d'injection et de refroidissement ;
- un réservoir de gaz oxydant ;
- des seconds moyens adaptés pour amener le gaz oxydant dudit réservoir de gaz oxydant au second dispositif d'injection dudit système d'injection et de refroidissement ;
- un réservoir de solution liquide S₃ ; et
- des troisièmes moyens adaptés pour amener la solution liquide S₃ dudit réservoir de solution liquide S₃ au troisième dispositif d'injection dudit système d'injection et de refroidissement.

8. Installation de traitement selon la revendication 7, **caractérisée en ce que** ledit réservoir de solution liquide S₃ est un réacteur contenant une solution S₂ différente de la solution liquide S₁ à traiter.

9. Installation de traitement selon la revendication 7, **caractérisée en ce que** ladite installation présente en outre un réacteur contenant une solution S₂ différente de la solution liquide S₁.

10. Installation de traitement selon l'une quelconque des revendications 7 à 9, **caractérisée en ce que** ladite installation comprend en outre un dispositif générant des rayonnements ultraviolets.

11. Installation de traitement selon l'une quelconque des revendications 7 à 10, **caractérisée en ce que** ladite installation comprend en outre en outre au moins un ou plusieurs éléments choisis dans le groupe constitué par (i') des moyens adaptés pour appliquer un courant électrique ou un potentiel donné à la torche à plasma et plus particulièrement aux électrodes constituant cette torche à plasma, (ii') des moyens adaptés pour alimenter la torche à plasma avec un gaz plasmagène et éventuellement un gaz secondaire, (iii') un condenseur, (iv') un filtre à air, (v') un dispositif de refroidissement de la solution S₂, (vi') un dispositif de filtration de la solution S₂, (vii') des moyens adaptés pour contrôler et ajuster le pH de la solution S₂ et (viii') des moyens adaptés pour ajouter un acide ou une base à la solution S₂.

12. Procédé de traitement d'une solution S₁ comprenant une étape consistant à injecter ladite solution S₁ dans un plasma généré à partir d'une torche à plasma telle que définie à la revendication 6 et immergé dans une solution S₂ distincte de ladite solution S₁.

13. Procédé selon la revendication 12, **caractérisé en ce qu'**il comprend les étapes consistant à :
a) générer un plasma à partir d'une torche à plasma équipée d'un système d'injection et de refroidissement tel que défini à l'une quelconque des revendications 1 à 5 ;
c) introduire du gaz oxydant à proximité du plasma via le second dispositif d'injection dudit système d'injection et de refroidissement ;
d) introduire la solution S₃ à proximité du plasma via le troisième dispositif d'injection dudit système d'injection et de refroidissement ; et
e) introduire la solution S₁ dans le plasma ainsi immergé via le premier dispositif d'injection dudit système d'injection et de refroidissement.

## Patentansprüche

1. Injektions- und Kühlsystem zum Ausstatten eines Plasmabrenners, das einen Hohlraum zum Aufnehmen von Plasma und Verbrennungsgas aufweist und enthält:
- eine erste Injektionsvorrichtung, die dazu geeignet ist, eine zu behandelnde flüssige Lösung, nachfolgend als Lösung S₁ bezeichnet, in den Hohlraum einzuspritzen,
- eine zweite Injektionsvorrichtung, die an der ersten Injektionsvorrichtung angeordnet und dazu geeignet ist, ein oxidierendes Gas in den Hohlraum einzuspritzen,
- eine Kühlvorrichtung, die dazu geeignet ist, das bzw. die in dem Hohlraum enthaltenen Gase abzukühlen,
**dadurch gekennzeichnet, dass**
das System eine dritte Injektionsvorrichtung enthält, die zwischen der zweiten Injektionsvorrichtung und der Kühlvorrichtung angeordnet und dazu geeignet ist, in den Hohlraum eine flüssige Lösung einzuspritzen, die sich von der zu behandelnden flüssigen Lösung unterscheidet und nachfolgend als Lösung S₃ bezeichnet ist, und die vier Vorrichtungen hohl ausgeführt sind, koaxial ausgerichtet sind und den Hohlraum begrenzen, und dass
das System nacheinander die erste Injektionsvorrichtung, die zweite Injektionsvorrichtung, die dritte Injektionsvorrichtung und die Kühlvorrichtung enthält, wobei die Vorrichtungen übereinander angeordnet sind.

2. injektions- und Kühlsystem nach Anspruch 1,
**dadurch gekennzeichnet, dass**
die erste Injektionsvorrichtung zumindest einen ersten Kanal enthält, der in den Hohlraum mündet und dazu geeignet ist, die Lösung S₁ darin einzuleiten.

3. Injektions- und Kühlsystem nach Anspruch 1 oder 2,
**dadurch gekennzeichnet, dass**
die zweite Injektionsvorrichtung zumindest einen zweiten Kanal enthält, der in den Hohlraum mündet und dazu geeignet ist, das oxydierende Gas darin einzuleiten.

4. Injektions- und Kühlsystem nach einem der Ansprüche 1 bis 3,
**dadurch gekennzeichnet, dass**
die dritte Injektionsvorrichtung zumindest einen dritten Kanal enthält, der in den Hohlraum mündet und dazu geeignet ist, die Lösung S₃ darin einzuleiten.

5. Injektions- und Kühlsystem nach einem der Ansprüche 1 bis 4,
**dadurch gekennzeichnet, dass**
die Kühlvorrichtung zumindest eine Hülse enthält, die durch interne Zirkulation von Wasser gekühlt wird.

6. Plasmabrenner, der mit einem Injektions- und Kühlsystem nach einem der Ansprüche 1 bis 5 ausgestattet ist.

7. Anlage zum Behandeln einer flüssigen Lösung S₁, enthaltend:
- einen Plasmabrenner, der mit einem Injektions- und Kühlsystem nach einem der Ansprüche 1 bis 5 ausgestattet ist;
- einen Vorratsbehälter für flüssige Lösung S₁;
- erste Einrichtungen, die dazu geeignet sind, die flüssige Lösung S₁ von dem Vorratsbehälter für flüssige Lösung S₁ zur ersten Injektionsvorrichtung des Injektions- und Kühlsystem zu leiten;
- einen Vorratsbehälter für oxidierendes Gas;
- zweite Einrichtungen, die dazu geeignet sind, das oxidierende Gas von dem Vorratsbehälter für oxidierendes Gas zur zweiten Injektionsvorrichtung des Injektions- und Kühlsystems zu leiten;
- einen Vorratsbehälter für flüssige Lösung S₃; und
- dritte Einrichtungen, die dazu geeignet sind, die flüssige Lösung S₃ von dem Vorratsbehälter für flüssige Lösung S₃ zur dritten Injektionsvorrichtung des Injektions- und Kühlsystems zu leiten.

8. Behandlungsanlage nach Anspruch 7,
**dadurch gekennzeichnet, dass**
der Vorratsbehälter für flüssige Lösung S₃ ein Reaktor ist, der eine Lösung S₂ enthält, die sich von der zu behandelnden flüssigen Lösung S₁ unterscheidet.

9. Behandlungsanlage nach Anspruch 7,
**dadurch gekennzeichnet, dass**
die Anlage ferner einen Reaktor aufweist, der eine Lösung S₂ enthält, die sich von der flüssigen Lösung S₁ unterscheidet.

10. Behandlungsanlage nach einem der Ansprüche 7 bis 9,
**dadurch gekennzeichnet, dass**
die Anlage ferner eine Vorrichtung enthält, die ultraviolette Strahlungen erzeugt.

11. Behandlungsanlage nach einem der Ansprüche 7 bis 10,
**dadurch gekennzeichnet, dass**
die Anlage ferner zumindest ein oder mehrere Elemente enthält, die ausgewählt sind aus der Gruppe umfassend (i') Einrichtungen, die dazu geeignet sind, einen elektrischen Strom oder ein gegebenes Potential an den Plasmabrenner und insbesondere an die diesen Plasmabrenner bildenden Elektroden anzulegen, (ii') Einrichtungen, die dazu geeignet sind, den Plasmabrenner mit einem Plasmagas und gegebenenfalls einem Sekundärgas zu versorgen, (iii') einen Kondensator, (iv') einen Luftfilter, (v') eine Kühlvorrichtung zum Kühlen der Lösung S₂, (vi') eine Filtervorrichtung zum Filtern der Lösung S₂, (vii') Einrichtungen, die dazu geeignet sind, den pH-Wert der Lösung S₂ zu prüfen und einzustellen und (viii') Einrichtungen, die dazu geeignet sind, der Lösung S₂ eine Säure oder Base zuzugeben.

12. Verfahren zum Behandeln einer Lösung S₁, umfassend einen Schritt, der darin besteht, die Lösung S₁ in ein Plasma einzuspritzen, das ausgehend von einem Plasmabrenner nach Anspruch 6 erzeugt wird und in eine Lösung S₂ eingetaucht wird, die sich von der Lösung S₁ unterscheidet.

13. Verfahren nach Anspruch 12, **dadurch gekennzeichnet, dass** es die Schritte umfasst:
a) Erzeugen eines Plasmas ausgehend von einem Plasmabrenner, der mit einem Injektions- und Kühlsystem nach einem der Ansprüche 1 bis 5 ausgestattet ist;
c) Einleiten von oxidierendem Gas nahe des Plasmas über die zweite Injektionsvorrichtung des Injektions- und Kühlsystems;
d) Einleiten der Lösung S₃ nahe des Plasmas über die dritte Injektionsvorrichtung des Injektions- und Kühlsystems; und
e) Einleiten der Lösung S₁ in das so eingetauchte Plasma über die erste Injektionsvorrichtung des Injektions- und Kühlsystems.

## Claims

1. Injection and cooling system, intended to equip a plasma torch, having a cavity intended to contain plasma and combustion gas and comprising:
- a first injection device devised to inject, into said cavity, a liquid solution to be treated hereinafter referred to as solution S₁,
- a second injection device arranged against said first injection device and devised to inject, into said cavity, an oxidant gas,
- a cooling device devised to cool the gas(es) contained in said cavity,
**characterised in that** said system comprises a third injection device inserted between said second injection device and said cooling device and devised to inject, into said cavity, a liquid solution different to the liquid solution to be treated hereinafter referred to as solution S₃ and said four devices being hollow, coaxially aligned and defining said cavity,
and **in that** said system successively comprises said first injection device, said second injection device, said third injection device and said cooling device, said devices being placed on top of one another.

2. Injection and cooling system according to claim 1, **characterised in that** said first injection device comprises at least one first channel leading to said cavity and devised to convey said solution S₁ therein.

3. Injection and cooling system according to claim 1 or 2, **characterised in that** said second injection device comprises at least one second channel leading to said cavity and devised to convey said oxidant gas therein.

4. Injection and cooling system according to any one of claims 1 to 3, **characterised in that** said third injection device comprises at least one third channel leading to said cavity and devised to convey said solution S₃ therein.

5. Injection and cooling system according to any one of claims 1 to 4, **characterised in that** said cooling device comprises at least one sheath cooled by internal water circulation.

6. Plasma torch equipped with an injection and cooling system according to any one of claims 1 to 5.

7. Installation for the treatment of a liquid solution S₁ comprising:
- a plasma torch equipped with an injection and cooling system according to any one of claims 1 to 5;
- a container of liquid solution S₁;
- first means devised to convey the liquid solution S₁ from said container of liquid solution S₁ to the first injection device of said injection and cooling system;
- a container of oxidant gas;
- second means devised to convey the oxidant gas from said container of oxidant gas to the second injection device of said injection and cooling system;
- a container of liquid solution S₃; and
- third means devised to convey the liquid solution S₃ from said container of liquid solution S₃ to the third injection device of said injection and cooling system.

8. Treatment installation according to claim 7, **characterised in that** said container of liquid solution S₃ is a reactor containing a solution S₂ different to the liquid solution S₁ to be treated.

9. Treatment installation according to claim 7, **characterised in that** said installation further has a reactor containing a solution S₂ different to the liquid solution S₁.

10. Treatment installation according to any one of claims 7 to 9, **characterised in that** said installation further comprises a device generating ultraviolet radiation.

11. Treatment installation according to any one of claims 7 to 10, **characterised in that** said installation further comprises at least one or a plurality of additional elements chosen from the group consisting of (i') means devised to apply an electrical current or a given potential to the plasma torch and more particularly to the electrodes forming this plasma torch, (ii') means devised to supply the plasma torch with a plasma-forming gas and optionally a secondary gas, (iii') a condenser, (iv') an air filter, (v') a device for cooling the solution S₂, (vi') a device for filtering the solution S₂, (vii') means devised to control and adjust the pH of the solution S₂ and (viii') means devised to add an acid or a base to the solution S₂.

12. Method for the treatment of a solution S₁ comprising a step consisting of injecting said solution S₁ into a plasma generated using a plasma torch as defined in claim 6 and submerged in a solution S₂ different from said solution S₁.

13. Method according to claim 12, **characterised in that** it comprises steps consisting of:
a) generating a plasma from a plasma torch equipped with an injection and cooling system according to any one of claims 1 to 5;
c) introducing an oxidant gas in the vicinity of the plasma via the second injection device of said injection and cooling system;
d) introducing the solution S₃ in the vicinity of the plasma via the third injection device of said injection and cooling system; and
e) introducing the solution S₁ into the plasma submerged in this way via the first injection device of said injection and cooling system.
